# EUROPÄISCHE PATENTANMELDUNG

(11) **EP 4 213 020 A1**
(43) Veröffentlichungstag der Anmeldung: **19.07.2023**
(21) Anmeldenummer: 22171859.6
(22) Anmeldetag: 05.05.2022
(51) Int. Cl.: G06F 9/50, G06Q 10/06

(54) **VERFAHREN ZUR VERTEILUNG VON RECHENDIENSTEN VERTEILTER SOFTWAREAPPLIKATIONEN AUF RECHENKNOTEN EINES RECHENKNOTENNETZWERKS, VERTEILEINRICHTUNG UND RECHENKNOTENNETZWERK**

(30) Priorität: 17.01.2022 DE 102022200460
(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Bei dem Verfahren zur Verteilung von Rechendiensten (RD1, RD2, RD3, RD4, RD5, RD6, RD7) einer oder mehrerer verteilter Softwareapplikationen auf jeweils einen der mehreren Rechenknoten eines Rechenknotennetzwerks wird ein datenzentriertes Rechenknotennetzwerk herangezogen und es wird eine Startverteilung von Rechendiensten (RD1, RD2, RD3, RD4, RD5, RD6, RD7) auf den Rechenknoten erfasst und ein Datenaustausch zwischen den Rechendiensten erfasst und anhand des erfassten Datenaustauschs ein Austauschparameter ermittelt und eine Sollvorgabe für den Austauschparameter herangezogen und der Austauschparameter wird in Richtung der Sollvorgabe geändert, indem die Rechendienste (RD1, RD2, RD3, RD4, RD5, RD6, RD7) mittels einer gegenüber der Startverteilung geänderten Verteilung der Rechendienste (RD1, RD2, RD3, RD4, RD5, RD6, RD7) auf die Rechenknoten verteilt werden.

## Beschreibung

Die Erfindung betrifft ein Verfahren zur Verteilung von Rechendiensten einer oder mehrerer verteilter Softwareapplikationen auf jeweils einen der mehreren Rechenknoten eines Rechenknotennetzwerks sowie eine Verteileinrichtung zur Verteilung von Rechendiensten eines Rechenknotennetzwerks und ein Rechenknotennetzwerk.

Die Erfindung betrifft ein Verfahren zur Verteilung von Rechendiensten einer oder mehrerer verteilter Softwareapplikationen auf jeweils einen der mehreren Rechenknoten eines Rechenknotennetzwerks sowie eine Verteileinrichtung zur Verteilung von Rechendiensten eines Rechenknotennetzwerks und ein Rechenknotennetzwerk.

Die heutige Industrielandschaft ist von zwei Trends geprägt: Ein erster Technologietrend erlaubt rechenintensive Anwendungen im Kontext von Big Data, Künstlicher Intelligenz, autonomem Computing, 5G und drahtlosem Computing.

Ein zweiter Technologietrend betrifft die Individualisierung von Produkten bei geringen Losgrößen, wobei einfach integrierbare und flexible sowie skalierbare kollaborative Systeme angestrebt werden, um Kundenanforderungen zu begegnen.

Die gleichzeitige Umsetzung dieser beiden Technologietrends wird typischerweise als Industrie-4.0 oder Industrial IoT (Industrielles Internet der Dinge, "IIoT") bezeichnet.

Solche Industrie-4.0-Systeme sind typischerweise hierarchisch und statisch umgesetzt. Eine Neukonfiguration dynamischer Netzwerkanwendungen ist regelmäßig aufwändig.

Eine flexible Produktionsplanung, etwa bei einer Fertigung veränderter oder neuartiger Produkte mittels einer bestehenden Fertigungsanlage, kann jedoch mit herkömmlichen Netzwerkanwendungen nur mit hohem manuellem Aufwand realisiert werden.

Bislang werden neuartige Netzwerkanwendungen mittels einer Neukonfigurierung der Datenübermittlung und der Topologie der Berechnungsorchestrierung auf Kundenseite adressiert, beispielsweise mittels einer Änderung statischer Adressen und Berechnungsumgebungen. Dies bedeutet großen Aufwand und lange Ausfallzeiten, bei welchem Untersysteme vollständig neu geplant werden müssen. Zudem bleiben Neukonfigurationen lediglich für eine gewisse Zeit aktuell, bis neue Umstände neue Lösungen erfordern.

Es ist vor diesem Hintergrund des Standes der Technik die Aufgabe der Erfindung, ein Verfahren anzugeben, mit welchem Softwareapplikationen in Rechenknotennetzwerken besser als bislang bekannt verteilt werden können. Ferner ist es Aufgabe der Erfindung, eine Verteileinrichtung zur Verteilung von Rechendiensten eines Rechenknotennetzwerks und ein Rechenknotennetzwerk anzugeben, welche zur Ausführung eines Verfahrens einem der vorhergehenden Ansprüche eingerichtet sind.

Diese Aufgabe der Erfindung wird mit einem Verfahren zur Verteilung von Rechendiensten einer oder mehrerer verteilter Softwareapplikationen auf jeweils einen der mehreren Rechenknoten eines datenzentrierten Rechenknotennetzwerks mit den in Anspruch 1 angegebenen Merkmalen und mit einer Verteileinrichtung zur Verteilung von Rechendiensten eines Rechenknotennetzwerks mit den in Anspruch 13 angegebenen Merkmalen sowie mit einem Rechenknotennetzwerk mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Verteilung von Rechendiensten einer oder mehrerer verteilter Softwareapplikationen auf jeweils einen der mehreren Rechenknoten eines Rechenknotennetzwerks wird ein datenzentriertes Rechenknotennetzwerk herangezogen und es wird eine Startverteilung von Rechendiensten auf den Rechenknoten erfasst und ein Datenaustausch zwischen den Rechendiensten erfasst und anhand des erfassten Datenaustauschs ein Austauschparameter ermittelt und eine Sollvorgabe für den Austauschparameter herangezogen und der Austauschparameter wird in Richtung der Sollvorgabe geändert, indem die Rechendienste mittels einer gegenüber der Startverteilung geänderten Verteilung der Rechendienste auf die Rechenknoten verteilt werden.

Mittels des erfindungsgemäßen Verfahrens können Rechendienste vorteilhaft derart auf Rechenknoten eines Rechenknotennetzwerks verteilt werden, dass der Datenaustausch innerhalb und zwischen Softwareapplikationen, zu welchen die Rechendienste gehören, optimiert wird. Erfindungsgemäß erfolgt eine solche Optimierung mittels einer Änderung des Austauschparameters in Richtung der Sollvorgabe für diesen Austauschparameter.

Vorteilhaft wird bei dem erfindungsgemäßen Verfahren ein Rechenknotennetzwerk in Gestalt eines datenzentrierten Rechenknotennetzwerks herangezogen. Mittels eines datenzentrierten Rechenknotennetzwerks kann von der unterliegenden Hardware-Architektur des Rechenknotennetzwerks abstrahiert werden. Vorzugsweise kommt dazu eine Middleware zum Einsatz, welche von der Hardware-Architektur abstrahiert und somit eine flexible Umverteilung von Rechendiensten auf jeweils andere Rechenknoten ermöglicht. Mittels einer solchen flexiblen Umverteilung von Rechendiensten müssen solche Rechendienste nicht manuell auf Rechenknoten des Rechenknotennetzwerks vorgesehen und implementiert werden, sondern die Rechendienste können automatisiert auf grundsätzlich jeden beliebigen Rechenknoten verteilt werden, da aufgrund der Middleware, die ein datenzentriertes Rechenknotennetzwerk ermöglicht, die Rechendienste nicht eigens auf die potenziell verschiedenen Rechenknoten angepasst werden müssen. Die Rechenknoten des Rechenknotennetzwerks können in einem solchen datenzentrierten Rechenknotennetzwerk also grundsätzlich jeden der Rechendienste übernehmen und der Datenaustausch zwischen den verschiedenen Rechendiensten kann standardisiert erfolgen, im Falle eines Rechenknotennetzwerks in Gestalt eines Publish-Subscribe-Netzwerks mittels Publish-Subscribe-Nachrichten, welche in Gestalt thematischer Abonnements von einigen Rechendiensten bereitgestellt und von anderen Rechendiensten abonniert werden können. Mittels eines solchen standardisierten Datenaustauschs ist eine Berücksichtigung unterschiedlicher Kommunikationsprotokolle oder unterschiedlicher Kommunikationsstandards bei der Ausführung des erfindungsgemäßen Verfahrens nicht erforderlich.

Das datenzentrierte Rechenknotennetzwerk erlaubt folglich sowohl eine flexible automatisierte Verteilung von Rechendiensten auf die Rechenknoten als auch eine automatisierte Änderung der Verteilung der Rechendienste auf die Rechenknoten, insbesondere in Fällen, in denen sich entweder das Rechenknotennetzwerk oder die Menge und Art der Softwareapplikationen, welche auf dem Rechenknotennetzwerk implementiert sind, ändern.

Mittels des erfindungsgemäßen Verfahrens wird der Datenaustausch der Rechendienste im Rechenknotennetzwerk während der Laufzeit der Rechendienste erfasst und der Austauschparameter bestimmt. Mittels einer neuen geänderten Verteilung der Rechendienste auf die Rechenknoten des Rechenknotennetzwerks wird der Austauschparameter optimiert, d. h. in Richtung der Sollvorgabe geändert. Dies erlaubt eine Optimierung des Datenaustausches im Rechenknotennetzwerk mittels eines Roamings der Funktionalität in dem Rechenknotennetzwerk.

Der Datenaustausch zwischen den Rechendiensten kann vorteilhaft ein Datenaustausch von Rechendiensten derselben Softwareapplikation sein. Auf diese Weise können Softwareapplikationen derart auf Rechenknoten eines Rechenknotennetzwerks verteilt werden, dass ein Datenaustausch optimiert wird. Alternativ und ebenfalls bevorzugt ist der Datenaustausch ein Datenaustausch von Rechendiensten verschiedener Softwareapplikationen. Auf diese Weise ist der Datenaustausch zugleich ein Datenaustausch zwischen verschiedenen Softwareapplikationen, sodass in dieser Weiterbildung der Erfindung insbesondere der Datenaustausch zwischen verschiedenen Softwareapplikationen optimiert werden kann. In einer bevorzugten Weiterbildung der Erfindung wird sowohl der Datenaustausch zwischen Rechendiensten jeweils derselben Softwareapplikation als auch der Datenaustausch von Rechendiensten verschiedener Softwareapplikationen erfasst und herangezogen, um den Austauschparameter zu ermitteln.

Vorteilhaft kann das erfindungsgemäße Verfahren für eine Optimierung von solchen verteilten Softwareapplikationen genutzt werden, welche auf dem Rechenknotennetzwerk für eine flexible Fertigung und/oder für eine Zuordnung von Fertigungsressourcen implementiert werden. Alternativ und ebenfalls vorteilhaft wird das erfindungsgemäße Verfahren herangezogen, um Rechendienste, welche Infrastrukturdienste des Rechenknotennetzwerks bilden, auf die Rechenknoten des Rechenknotennetzwerks zu verteilen, insbesondere virtuelle Netzwerkfunktionen. In diesen Weiterbildungen der Erfindung ist es folglich nicht erforderlich, das Rechenknotennetzwerk herunterzufahren, um zeitaufwändig eine neue geänderte Verteilung der Rechendienste zu planen und zu realisieren. Vielmehr kann eine geänderte Verteilung auch zeitnah, insbesondere zur Laufzeit, des Rechenknotennetzwerks realisiert werden.

Besonders bevorzugt ist bei dem erfindungsgemäßen Verfahren das datenzentrierte Rechenknotennetzwerk ein Publish-Subscribe-Netzwerk. Insbesondere Publish-Subscribe-Netzwerke erlauben in an sich bekannter Weise die Realisierung von datenzentrierten Rechenknotennetzwerken. Vorzugsweise wird bei dem Publish-Subscribe-Netzwerk der Datenaustausch mittels Topic-basierter, d. h. mittels thematisch organisierter, Abonnements von Daten realisiert, die jeweils durch einen oder mehrere Rechendienste bereitgestellt werden und welche jeweils von einem oder mehreren Rechendiensten abonniert werden.

Bevorzugt ist oder umfasst bei dem erfindungsgemäßen Verfahren der Austauschparameter eine Latenz des Datenaustauschs und/oder eine Rate des Datenaustauschs und/oder eine Kapazität des Datenaustauschs. Auf diese Weise können die Rechendienste derart auf den Rechenknotennetzwerk verteilt werden, dass die Latenz des Datenaustauschs abnimmt und ein Datenaustausch besonders verzögerungsfrei unternommen werden kann und vorzugsweise auf diesen Austauschparameter hin die Verteilung der Rechendienste optimiert wird. Vorzugsweise wird mittels des erfindungsgemäßen Verfahrens alternativ oder zusätzlich eine möglichst hohe Rate des Datenaustauschs und/oder eine möglichst hohe Ausschöpfung der vorhandenen Kapazität des Datenaustauschs realisiert und vorzugsweise auf diesen Austauschparameter hin optimiert.

Bei dem erfindungsgemäßen Verfahren erfolgt vorzugsweise die Änderung der Verteilung der Rechendienste dann, wenn mindestens ein zusätzlicher Rechenknoten in das Rechenknotennetzwerk eintritt. In dieser Weiterbildung der Erfindung erfordert die Integration eines neuen Rechenknotens keine manuelle Neukonfiguration des Rechenknotennetzwerks, sondern mittels des erfindungsgemäßen Verfahrens kann eine neue geänderte Verteilung der Rechendienste auf die Rechenknoten des Rechenknotennetzwerks automatisiert und mit geringstmöglichen Beeinträchtigungen des Rechenknotennetzwerks erfolgen. Insbesondere muss das Rechenknotennetzwerk nicht eigens herunterfahren werden. Zudem kann mittels des erfindungsgemäßen Verfahrens das Rechenknotennetzwerk flexibel um weitere Rechenknoten ergänzt werden, denn mittels des erfindungsgemäßen Verfahrens ist es nicht erforderlich, an einer bislang auf dem Rechenknotennetzwerk realisierten Verteilung der Rechendienste festzuhalten, da die Verteilung nicht statisch ein unverändert fortbestehendes Rechenknotennetzwerk erfordert, sondern flexibel eine neue geänderte Verteilung realisiert werden kann.

Bevorzugt erfolgt bei dem Verfahren die Änderung der Verteilung der Rechendienste dann, wenn mindestens ein Rechenknoten aus dem Rechenknotennetzwerk ausscheidet. Analog zu dem oben erläuterten Fall des Eintretens eines neuen Rechenknotens in das Rechenknotennetzwerk kann aufgrund des automatisierbaren Verfahrens ein Weiterbetrieb des Rechenknotennetzwerks mit geringstmöglichen Beeinträchtigungen erfolgen. Zudem können Rechenknoten einfach aus dem Rechenknotennetzwerk ausscheiden, denn mittels des erfindungsgemäßen Verfahrens ist es nicht erforderlich, an einer bestehenden Verteilung der Rechendienste festzuhalten, da eine neue Verteilung flexibel vorgenommen werden kann.

In einer bevorzugten Weiterbildung der Erfindung erfolgt die Änderung der Verteilung der Rechendienste dann, wenn mindestens ein zusätzlicher Rechendienst zum Rechenknotennetzwerk hinzutritt. In diesem Fall mag eine Auslastung eines Rechenknotens oder eine Kapazität für den Datenaustausch eine neue Verteilung erfordern, um den Austauschparameter in Richtung der Sollvorgabe zu ändern. Mittels des erfindungsgemäßen Verfahrens kann eine solche neue geänderte Verteilung mit minimalen Beeinträchtigungen des Betriebs des Rechenknotennetzwerks leicht erfolgen.

Be dem Verfahren gemäß der Erfindung erfolgt die Änderung der Verteilung der Rechendienste vorzugsweise dann, wenn mindestens ein Rechendienst auf dem Rechenknotennetzwerk beendet wird. Auch in diesem Fall kann die Verteilung der fortbestehenden Rechendienste geändert werden, sodass der Austauschparameter in Richtung der Sollvorgabe geändert werden kann.

Bei dem erfindungsgemäßen Verfahren erfolgt in einer bevorzugten Weiterbildung die Verteilung der Rechendienste auf jeweils eine echte Teilmenge der Rechenknoten. In dieser Weiterbildung der Erfindung werden die Rechendienste nicht auf sämtliche Rechenknoten des Rechenknotennetzwerks verteilt, sondern Rechendienste sind lediglich auf einzelnen oder einem Rechenknoten der echten Teilmenge implementiert. In dieser Weiterbildung der Erfindung besteht folglich eine enge Korrespondenz der Datenverbindung zwischen den Rechenknoten und dem Datenaustausch zwischen den Rechendiensten. Mittels dieser Weiterbildung der Erfindung lässt sich eine Änderung in der Datenverbindung zwischen Rechenknoten des Rechenknotennetzwerks folglich leicht adressieren.

Die Änderung der Verteilung der Rechendienste erfolgt bei dem erfindungsgemäßen Verfahren in einer vorteilhaften Weiterbildung dann, wenn sich mindestens ein Datenverbindungsparameter mindestens einer Datenverbindung zwischen Rechenknoten des Rechenknotennetzwerks ändert. In dieser Weiterbildung der Erfindung kann sich eine Änderung der Datenverbindung zwischen Rechenknoten des Rechenknotennetzwerks auf eine Änderung des Datenaustauschs zwischen Rechendiensten auf diesen Rechenknoten auswirken. In dieser Weiterbildung der Erfindung kann also dieser Umstand mittels des erfindungsgemäßen Verfahrens einfach berücksichtigt werden.

Geeigneter Weise wird bei dem erfindungsgemäßen Verfahren der Austauschparameter derart mittels einer Änderung der Verteilung der Rechendienste in Richtung der Sollvorgabe geändert, dass eine Mehrzahl von Kandidatenverteilungen für die Verteilung der Rechendienste ermittelt wird und eine solche Kandidatenverteilung der Mehrzahl ausgewählt wird, bei welcher ein Abstand des Austauschparameters zur Sollvorgabe verringert oder minimiert wird. Die Mehrzahl von Kandidatenverteilungen wird in einer Weiterbildung der Erfindung mittels eines Zufallsgenerators ermittelt, der zufällige Verteilungen bestimmt. Der Austauschparameter kann für jede Kandidatenverteilung dann mittels Simulation ermittelt werden.

Bei dem erfindungsgemäßen Verfahren wird in einer zweckmäßigen Weiterbildung die Änderung der Verteilung der Rechendienste mittels eines neuronalen Netzes bestimmt, wobei ein solches neuronales Netz herangezogen wird, welches mit einer Reihe von Startverteilungen von Rechendiensten als Eingangsdaten trainiert wird, wobei Verteilungen der Rechendienste Ausgangsdaten bilden und wobei der Austauschparameter als Gütekriterium für die Beurteilung der Ausgangsdaten herangezogen wird.

Bei dem erfindungsgemäßen Verfahren werden vorzugsweise mindestens zwei Rechendienste je mindestens einer Softwareapplikation auf unterschiedliche, d. h. nichtidentische, Rechenknoten verteilt. Insbesondere sind vorzugsweise auf diesen unterschiedlichen Rechenknoten jeweils nicht sämtliche Rechendienste der Softwareapplikation verteilt. In dieser Weiterbildung der Erfindung handelt es sich bei den Softwareapplikationen folglich um echte verteilte Softwareapplikationen, bei denen Rechendienste der Softwareapplikationen auf unterschiedliche einzelne Rechenknoten und/oder auf Untermengen on Rechenknoten verteilt werden.

Die erfindungsgemäße Verteileinrichtung ist zur Verteilung von Rechendiensten eines Rechenknotennetzwerks gemäß dem vorhergehend beschriebenen erfindungsgemäßen Verfahren ausgebildet und eingerichtet und umfasst eine Erfassungseinrichtung zur Erfassung des Austauschparameters sowie eine Implementierungseinrichtung zur Einrichtung des Rechendienstes auf mindestens einem Rechenknoten des Rechenknotennetzwerks. Solche Erfassungsmittel können insbesondere an sich bekannte Schnittstellen umfassen, auf welchen jeweils eine Monitoring-Software zur Erfassung der Austauschparameter des Datenaustauschs implementiert ist. Die Implementierungsmittel umfassen bevorzugt mindestens eine Programmanweisung zum Laden und Ausführen der jeweiligen Rechendienste auf den jeweiligen Rechenknoten.

Das erfindungsgemäße Rechenknotennetzwerk weist eine erfindungsgemäße Verteileinrichtung wie vorhergehend beschrieben auf, wobei das Rechenknotennetzwerk vorzugsweise ein datenzentriertes Rechenknotennetzwerk, insbesondere ein Publish-Subscribe-Netzwerk, ist.

Nachfolgend wird die Erfindung anhand eines in der Zeichnung dargestellten Ausführungsbeispiels näher erläutert. Es zeigen:
- Fig. 1: einen Ablauf eines Ausführungsbeispiels des erfindungsgemäßen Verfahrens schematisch in einer Prinzipskizze sowie
- Fig. 2: ein Ausführungsbeispiel für ein erfindungsgemäßes datenzentrisches Netzwerk einer erfindungsgemäßen Fertigungsanlage.

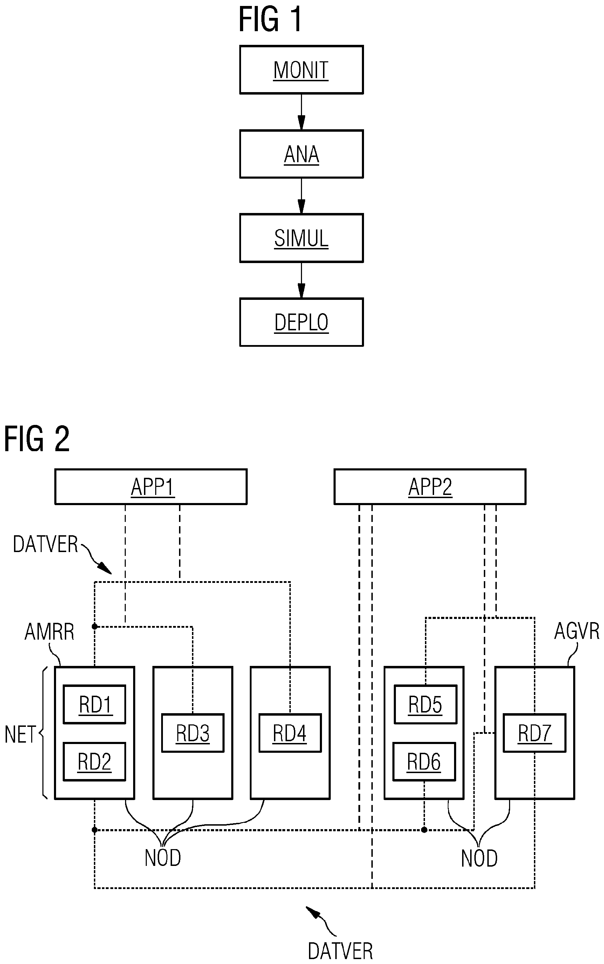

Das in Fig. 1 dargestellte Ausführungsbeispiel des erfindungsgemäßen Verfahrens wird bei der digitalen Fertigung in einer automatisierten Fertigungsanlage FERT eingesetzt.

Die Fertigungsanlage FERT ist zur Fertigung mit unterschiedlichen Fertigungsprozessen ausgebildet. Dazu weist die Fertigungsanlage FERT ein erfindungsgemäßes Netzwerk NET in Form eines Internet-der-Dinge-Netzwerks auf, welches eine Mehrzahl von Knoten NOD aufweist. Die Knoten NOD des Netzwerks NET sind mit autonomen geführten Fahrzeugen AGVR sowie mit autonomen mobilen Robotern AMRR sowie mit weiteren mobilen Knoten NOD gebildet. Die autonomen geführten Fahrzeuge AGVR sind zum Ressourcentransport von Fertigungsressourcen, etwa von Rohmaterialien, ausgebildet. Die autonomen mobilen Roboter AMRR weisen Fertigungsfähigkeiten zur Bearbeitung von Werkstücken, etwa Schweißeinrichtungen zum Schweißen von Werkstücken oder Bohrwerkzeuge zum Bohren von Löchern, auf. Zudem benötigt das Netzwerk NET zu unterschiedlichen Zeiten unterschiedliche Rechenressourcen.

Die benötigten Rechenressourcen werden durch die Knoten NOD in Gestalt der autonomen geführten Fahrzeuge AGVR sowie der autonomen mobilen Roboter AMRR und der weiteren mobilen Knoten NOD bereitgestellt. Zudem stellen beispielsweise Steuereinrichtungen, welche Teile der Fertigungsprozesse steuern, weitere Rechenressourcen zur Verfügung. Die Rechenressourcen werden von Rechendiensten RD1, RD2, RD3, RD4, RD5, RD6, RD7 in Form von Datenverarbeitungsprozessen genutzt. Beispielsweise sind solche Datenverarbeitungsprozesse Verschlüsselungsvorgänge zur Kommunikation mit dem autonomen geführten Fahrzeug AGVR oder Berechnungen, die zur Planung von Fahrvorgängen der autonomen geführten Fahrzeuge AGVR oder zur Steuerung der autonomen geführten Fahrzeuge AGVR während ihrer Fahrt dienen und die Bestandteile von Softwareapplikationen APP1, APP2 zum Betreiben der autonomen geführten Fahrzeuge AGVR, etwa einer Fahranwendung, sind. Beispielsweise sind weitere Datenverarbeitungsprozesse die Bewegungsplanung für eine Bewegung der autonomen mobilen Roboter AMRR und Sensorauswertungen von Sensoren der autonomen mobilen Roboter AMRR, die einen Prozessschritt einer Fertigungsanwendung der autonomen mobilen Roboter AMRR bildet.

Die Softwareapplikationen APP1, APP2 sind in dem Netzwerk NET als verteilte Softwareapplikationen implementiert, welche nicht oder nicht notwendig von einzelnen Knoten NOD des Netzwerks NET allein ausgeführt werden, sondern welche in an sich bekannter Weise über einen oder mehrere Knoten NOD des Netzwerks NET verteilt ausgeführt werden. Die Rechendienste RD1, RD2, RD3, RD4, RD5, RD6, RD7, aus welchen sich die Softwareapplikationen APP1, APP2 zusammensetzen, sind hingegen jeweils auf einem einzigen Knoten NOD des Netzwerks NET implementiert und werden von diesen Knoten NOD ausgeführt. Grundsätzlich kann ein Rechendienst einer Softwareapplikation auf mehreren unterschiedlichen Knoten NOD des Netzwerks NET implementiert und durch diesen Knoten NOD ausgeführt werden. Folglich kann im Netzwerk NET ein Roaming der Funktionalität auf unterschiedlichen Knoten NOD, im dargestellten Ausführungsbeispiel sämtlichen Knoten NOD, unternommen werden.

Die im Netzwerk NET von den Softwareapplikationen erforderten Rechenressourcen des Netzwerks NET sind jedoch zeitlich variabel: Die Rechenressourcen des Netzwerks NET ändern sich beispielsweise, wenn Knoten NOD in Gestalt von autonomen geführten Fahrzeugen AGVRR oder von autonomen mobilen Robotern AMRR zum Netzwerk NET hinzutreten oder Knoten NOD aus den Netzwerk NET ausscheiden. Zudem ändert sich der Bedarf an Rechenressourcen des Netzwerks NET, wenn zusätzliche Softwareapplikationen APP1, APP2 gestartet werden oder wenn bislang laufende Softwareapplikationen APP1, APP2 beendet werden. Beispielsweise erfordern zusätzlich in das Netzwerk NET eingebundene Knoten NOD, etwa in Form von autonomen mobilen Robotern AMRR, zu ihrem Betrieb zusätzliche Softwareapplikationen APP1, APP2, welche eine Ausführung zusätzlicher Rechendienste RD1, RD2, RD3, RD4, RD5, RD6, RD7 im Netzwerk NET erforderlich machen. Ebenso können aus dem Netzwerk NET ausscheidende Knoten NOD, etwa autonome geführte Fahrzeuge AGVR, infolge ihrer entfallenden Softwareapplikationen APP1, APP2 und somit fortfallenden zu den Softwareapplikationen APP1, APP2 gehörenden Rechendienste RD1, RD2, RD3, RD4, RD5, RD6, RD7, den Bedarf an Rechenressourcen reduzieren. Mittels des erfindungsgemäßen Verfahrens wird die zeitliche Variabilität des Bedarfs an Rechenressourcen adressiert und eine verbesserte Bereitstellung von Rechenressourcen im Netzwerk NET realisiert.

Zur Optimierung der Bereitstellung von Rechenressourcen im Netzwerk NET werden erfindungsgemäß die einzelnen jeweils auf einem Knoten NOD implementierten Rechendienste RD1, RD2, RD3, RD4, RD5, RD6, RD7 in den Blick genommen: So erfordern die Rechendienste RD1, RD2, RD3, RD4, RD5, RD6, RD7 der verschiedenen Softwareapplikationen APP1, APP2 einen Datenaustausch zwischen den Rechendiensten RD1, RD2, RD3, RD4, RD5, RD6, RD7. Einerseits dient der Datenaustausch der Koordination der Rechendienste RD1, RD2, RD3, RD4, RD5, RD6, RD7 jeweils einer übergeordneten Softwareapplikation APP1, APP2 untereinander als auch der Kommunikation verschiedener Softwareapplikationen APP1, APP2 miteinander.

Der Datenaustausch zwischen den unterschiedlichen Rechendiensten RD1, RD2, RD3, RD4, RD5, RD6, RD7 wird mittels Publish-Subscribe-Verfahren realisiert. Dazu werden im Netzwerk NET Topics semantisch geordnet und von Rechendiensten RD1, RD2, RD3, RD4, RD5, RD6, RD7 der einzelnen Knoten NOD angebotene Daten als Abonnement zur Verfügung gestellt und von Rechendiensten RD1, RD2, RD3, RD4, RD5, RD6, RD7 benötigte Daten werden abonniert. In dieser Ausgestaltung können Daten von der unterliegenden Hardware abstrahiert werden und über verschiedene Knoten NOD verteilt angeboten werden. Das Netzwerk NET bildet also ein Publish-Subscribe-Netzwerk. Der Datenaustausch erfolgt in dem erfindungsgemäßen Netzwerk NET mittels eines nicht eigens in der Zeichnung detaillierten Nachrichtenbusses. Ein Nachrichtenbus-Monitoring-System erlaubt die Erfassung sämtlicher relevanten Parameter des Datenaustauschs mittels einer entsprechenden Beobachtung des Nachrichtenbusses.

Bei dem erfindungsgemäßen Verfahren wird zunächst eine Startverteilung der Rechendienste RD1, RD2, RD3, RD4, RD5, RD6, RD7 und ein Datenaustausch der unterschiedlichen Rechendienste RD1, RD2, RD3, RD4, RD5, RD6, RD7 miteinander in einem Monitoring-Schritt MONIT erfasst. Dazu wird beim Monitoring-Schritt MONIT jeweils ein Umfang der beim Datenaustausch ausgetauschten Daten erfasst. Zudem werden Austauschparameter des jeweiligen Datenaustauschs berücksichtigt, vorliegend Übertragungsparameter wie eine Latenz des Datenaustauschs und/oder eine Übermittlungsdauer des Datenaustauschs oder eine Übertragungskapazität des Datenaustauschs.

Der erfasste Datenaustausch der Rechendienste RD1, RD2, RD3, RD4, RD5, RD6, RD7 miteinander wird in einem Analyseschritt ANA analysiert. Im Analyseschritt ANA wird der erfasste Datenaustausch des gesamten Netzwerks NET hinsichtlich eines Performance-Indikators beurteilt. Ein solcher Performance-Indikator ist im gezeigten Ausführungsbeispiel beispielsweise die CPU-Auslastung sämtlicher für die Rechendienste RD1, RD2, RD3, RD4, RD5, RD6, RD7 zur Verfügung stehenden CPUs der Knoten NOD des Netzwerks NET. Alternativ oder zusätzlich kann die Speicherplatzbelegung insgesamt einen Performance-Indikator bilden. In weiteren, nicht eigens dargestellten Ausführungsbeispielen kann eine gewichtete Kombination der CPU-Auslastung und der Speicherplatzbelegung einen Performance-Indikator bilden.

Wenn sich der Bedarf des Netzwerks NET an Rechenressourcen ändert, wird eine neue Verteilung der Rechendienste RD1, RD2, RD3, RD4, RD5, RD6, RD7 auf die Knoten NOD des Netzwerks NET vorgenommen.

Mittels dieser neuen Verteilung der Rechendienste RD1, RD2, RD3, RD4, RD5, RD6, RD7 auf die Knoten NOD wird eine Optimierung des Performance-Indikators vorgenommen. Dazu erfolgt eine solche Verteilung von Rechendiensten RD1, RD2, RD3, RD4, RD5, RD6, RD7 auf die Knoten NOD des Netzwerks NET, welche eine Verbesserung des Performance-Indikators in Richtung einer Sollvorgabe vornimmt. Eine solche Sollvorgabe können eine möglichst geringe Speicherplatzbelegung und/oder eine möglichst gleichmäßige CPU-Auslastung sämtlicher Rechenressourcen des Netzwerks NET bilden. Dabei kann eine Sollvorgabe zum einen in einer numerischen Vorgabe des Performance-Indikators bestehen oder in einer Angabe einer Richtung, in welcher der Performance-Indikator ein Extremum erreichen soll.

Zur Optimierung des Performance-Indikators können in verschiedenen Ausführungsbeispielen unterschiedliche Verfahrensschritte angewandt werden: In einem sehr einfachen Ausführungsbeispiel werden die Austauschparameter zwischen den verschiedenen Rechendiensten RD1, RD2, RD3, RD4, RD5, RD6, RD7 herangezogen und mit der Zuweisung der Rechendienste RD1, RD2, RD3, RD4, RD5, RD6, RD7 zu den jeweiligen Knoten NOD des Netzwerks NET in Beziehung gesetzt. Anhand der zwischen den verschiedenen Rechendiensten RD1, RD2, RD3, RD4, RD5, RD6, RD7 der Knoten NOD bestehenden Austauschparameter kann nun eine Annahme getroffen werden, welche Übertragungseigenschaften zwischen verschiedenen Knoten NOD des Netzwerks NET bestehen, d. h. insbesondere auch, welche Austauschparameter zwischen den verschiedenen Knoten NOD bestehen. Davon ausgehend kann nun in einem Simulationsschritt SIMUL simuliert werden, wie bei einer Umverteilung der Rechendienste RD1, RD2, RD3, RD4, RD5, RD6, RD7 auf andere Knoten NOD die Austauschparameter der umverteilten Rechendienste RD1, RD2, RD3, RD4, RD5, RD6, RD7 aussehen würden. Es kann nun in einem ersten Ausführungsbeispiel eine Mehrzahl von unterschiedlichen Verteilungen, beispielswiese mithilfe eines Zufallszahlengenerators, festgelegt werden und es kann für diese Mehrzahl von Verteilungen der Rechendienste RD1, RD2, RD3, RD4, RD5, RD6, RD7 auf Knoten NOD des Netzwerks NET jeweils ein Performance-Indikator simuliert werden. Für jede Verteilung der Mehrzahl kann nun der Performance-Indikator gespeichert werden und nachfolgend diejenige Verteilung ausgewählt werden, bei welcher der simulierte Performance-Indikator der Sollvorgabe für den Performance-Indikator am nächsten kommt. Der Performance-Indikator dieser ausgewählten Verteilung kann nun mit dem Performance-Indikator der aktuell bestehenden Verteilung von Rechendiensten RD1, RD2, RD3, RD4, RD5, RD6, RD7 auf die Knoten NOD verglichen werden. Kommt der Performance-Indikator der ausgewählten Verteilung der Sollvorgabe für den Performance-Indikator näher als der aktuell in dem Netzwerk NET vorherrschende Performance-Indikator, so wird die ausgewählte Verteilung herangezogen und es werden die Rechendienste RD1, RD2, RD3, RD4, RD5, RD6, RD7 anhand der ausgewählten Verteilung auf die Knoten NOD des Netzwerks NET in einem Verteilschritt DEPLO verteilt. Anderenfalls bleibt die Verteilung wie aktuell realisiert bestehen.

In einem weiteren Ausführungsbeispiel wird nicht allein eine Mehrzahl von zufälligen Verteilungen im Hinblick auf den sich ergebenden Performance-Indikator getestet, sondern es wird ein neuronales Netz herangezogen, welches speziell für den Einsatz beim erfindungsgemäßen Verfahren trainiert ist. Dazu wird ein solches neuronales Netz herangezogen, welches mit Eingangsdaten in Gestalt von Netzwerktopologien von Netzwerken NET mit bekannten Austauschparametern zwischen auf Knoten NOD des jeweiligen Netzwerks NET implementierten Rechendiensten RD1, RD2, RD3, RD4, RD5, RD6, RD7 trainiert ist. Ausgangsdaten des neuronalen Netzes bilden jeweils eine Verteilung von Rechendiensten RD1, RD2, RD3, RD4, RD5, RD6, RD7 auf den Knoten NOD des jeweiligen Netzwerks NET. Das Training erfolgt nun derart, dass jeweils solche Ausgangsdaten des neuronalen Netzes bevorzugt werden, welche den Performance-Indikator des Netzwerks NET in Richtung einer zum Training vorgegebenen Sollvorgabe für den Performance-Indikator optimiert. Mit einem solchen neuronalen Netz kann folglich in diesem weiteren Ausführungsbeispiel eine neue Verteilung von Rechendiensten RD1, RD2, RD3, RD4, RD5, RD6, RD7 auf die Knoten NOD des Netzwerks NET erfolgen, nachdem die Netzwerktopologie dem neuronalen Netz übermittelt worden ist und die erfassten Austauschparameter der Datenübertragung zwischen den Rechendiensten RD1, RD2, RD3, RD4, RD5, RD6, RD7 der Knoten NOD dem neuronalen Netz als weitere Eingangsdaten übergeben werden.

In einem weiteren Ausführungsbeispiel wird eine neue Optimierung der Verteilung der Rechendienste RD1, RD2, RD3, RD4, RD5, RD6, RD7 auf Knoten NOD des Netzwerks NET dann vorgenommen, wenn sich das Angebot an Rechenressourcen im Netzwerk NET ändert.

Beispielsweise können neu zum Netzwerk NET hinzutretende Knoten NOD, welche Rechenressourcen an das Netzwerk NET bereitstellen, neue Rechendienste RD1, RD2, RD3, RD4, RD5, RD6, RD7 aufnehmen. Für die vorhergehenden Ausführungsbeispiele wird für solche neu zum Netzwerk NET hinzutretende Knoten NOD standardisierte Norm-Austauschparameter für die Datenübertragung vom neuen Knoten NOD zu jeweils den übrigen Knoten NOD des Netzwerks NET angenommen, welche etwa aus einer Datenbank mit modellierten Norm-Austauschparameter für die Datenübertragung ausgelesen werden. Folglich kann die Optimierung zunächst mittels angenommener Norm-Austauschparameter erfolgen. Ist der neu hinzutretende Knoten NOD bereits in das Netzwerk NET integriert, so kann optional nach einer Testzeit für die Verteilung der Rechendienste RD1, RD2, RD3, RD4, RD5, RD6, RD7 auf die Knoten NOD eine neue Verteilung der Rechendienste RD1, RD2, RD3, RD4, RD5, RD6, RD7 angestoßen werden.

Die neue Verteilung der Rechendienste RD1, RD2, RD3, RD4, RD5, RD6, RD7 auf die Knoten NOD erfolgt mittels eines nicht eigens dargestellten Orchestriermoduls, welches Erfassungsmittel zur Erfassung der Austauschparameter der Datenübertragung zwischen den Rechendiensten RD1, RD2, RD3, RD4, RD5, RD6, RD7 aufweist. Solche Erfassungsmittel umfassen beispielsweise an sich bekannte Schnittstellen, auf welchen jeweils eine Monitoring-Software zur Erfassung der Austauschparameter der Datenübertragung implementiert ist. Das Orchestriermodul weist zudem Bestimmungsmittel zur Bestimmung einer neuen Verteilung von Rechendiensten RD1, RD2, RD3, RD4, RD5, RD6, RD7 auf die Knoten NOD des Netzwerks NET auf, beispielsweise das oben beschriebene trainierte neuronale Netz oder einen Prozessor für die oben beschriebene zufällige Generierung der Mehrzahl von Verteilungen und die zugehörige Simulation der Performance-Indikatoren. Zudem weist das Orchestriermodul Implementierungsmittel auf, welche die Rechendienste RD1, RD2, RD3, RD4, RD5, RD6, RD7 auf den Knoten NOD implementieren, etwa eine eine Übermittlungseinrichtung an den jeweiligen Knoten NOD zur Übermittlung einer Programmanweisung zum Laden und Ausführen der jeweiligen Rechendienste RD1, RD2, RD3, RD4, RD5, RD6, RD7 auf den jeweiligen Knoten NOD.

## Patentansprüche

1. Verfahren zur Verteilung von Rechendiensten (RD1, RD2, RD3, RD4, RD5, RD6, RD7) einer oder mehrerer verteilter Softwareapplikationen (APP1, APP2) auf jeweils einen der mehreren Rechenknoten (NOD) eines Rechenknotennetzwerks (NET), bei welchem
- als Rechenknotennetzwerk (NET) ein datenzentriertes Rechenknotennetzwerk (NET) herangezogen wird,
- eine Startverteilung von Rechendiensten (RD1, RD2, RD3, RD4, RD5, RD6, RD7) auf den Rechenknoten (NOD) erfasst wird und
- ein Datenaustausch zwischen den Rechendiensten (RD1, RD2, RD3, RD4, RD5, RD6, RD7) erfasst wird und
- anhand des erfassten Datenaustauschs ein Austauschparameter ermittelt wird und
- eine Sollvorgabe für den Austauschparameter herangezogen wird und
- der Austauschparameter in Richtung der Sollvorgabe geändert wird, indem die Rechendienste (RD1, RD2, RD3, RD4, RD5, RD6, RD7) mittels einer gegenüber der Startverteilung geänderten Verteilung der Rechendienste (RD1, RD2, RD3, RD4, RD5, RD6, RD7) auf die Rechenknoten (NOD) verteilt (DEPLO) werden.

2. Verfahren nach dem vorhergehenden Anspruch, bei welchem das datenzentrierte Rechenknotennetzwerk (NET) ein Publish-Subscribe-Netzwerk ist.

3. Verfahren nach einem der vorhergehenden Ansprüche, bei welchem der Austauschparameter eine Latenz des Datenaustauschs und/oder eine Rate des Datenaustauschs und/oder eine Kapazität des Datenaustauschs ist oder umfasst.

4. Verfahren nach einem der vorhergehenden Ansprüche, bei welchem die Änderung der Verteilung der Rechendienste (RD1, RD2, RD3, RD4, RD5, RD6, RD7) dann erfolgt, wenn mindestens ein zusätzlicher Rechenknoten (NOD) in das Rechenknotennetzwerk (NET) eintritt.

5. Verfahren nach einem der vorhergehenden Ansprüche, bei welchem die Änderung der Verteilung der Rechendienste (RD1, RD2, RD3, RD4, RD5, RD6, RD7) dann erfolgt, wenn mindestens ein Rechenknoten (NOD) aus dem Rechenknotennetzwerk (NET) verlässt.

6. Verfahren nach einem der vorhergehenden Ansprüche, bei welchem die Änderung der Verteilung der Rechendienste (RD1, RD2, RD3, RD4, RD5, RD6, RD7) dann erfolgt, wenn mindestens ein zusätzlicher Rechendienst zum Rechenknotennetzwerk (NET) hinzutritt.

7. Verfahren nach einem der vorhergehenden Ansprüche, bei welchem die Änderung der Verteilung der Rechendienste (RD1, RD2, RD3, RD4, RD5, RD6, RD7) dann erfolgt, wenn mindestens ein Rechendienst das Rechenknotennetzwerk (NET) beendet wird.

8. Verfahren nach einem der vorhergehenden Ansprüche, bei welchem die Verteilung der Rechendienste (RD1, RD2, RD3, RD4, RD5, RD6, RD7) auf jeweils eine echte Teilmenge der Rechenknoten (NOD) erfolgt.

9. Verfahren nach einem der vorhergehenden Ansprüche, bei welchem die Änderung der Verteilung der Rechendienste (RD1, RD2, RD3, RD4, RD5, RD6, RD7) dann erfolgt, wenn sich mindestens ein Datenverbindungsparameter mindestens einer Datenverbindung (DATVER) zwischen Rechenknoten (NOD)des Rechenknotennetzwerks (NET) ändert.

10. Verfahren nach einem der vorhergehenden Ansprüche, bei welchem der Austauschparameter derart mittels einer Änderung der Verteilung der Rechendienste (RD1, RD2, RD3, RD4, RD5, RD6, RD7) in Richtung der Sollvorgabe geändert wird, dass eine Mehrzahl von Kandidatenverteilungen für die Verteilung der Rechendienste (RD1, RD2, RD3, RD4, RD5, RD6, RD7) ermittelt wird und eine solche Kandidatenverteilung der Mehrzahl ausgewählt wird, bei welcher ein Abstand des Austauschparameters zur Sollvorgabe verringert oder minimiert wird.

11. Verfahren nach einem der vorhergehenden Ansprüche, bei welchem ein die Änderung der Verteilung der Rechendienste (RD1, RD2, RD3, RD4, RD5, RD6, RD7) mittels eines neuronalen Netzes bestimmt wird, wobei ein solches neuronales Netz herangezogen wird, welches mit einer Reihe von Startverteilungen von Rechendiensten (RD1, RD2, RD3, RD4, RD5, RD6, RD7) als Eingangsdaten trainiert wird und bei welchem Verteilungen der Rechendienste (RD1, RD2, RD3, RD4, RD5, RD6, RD7) Ausgangsdaten bilden, wobei der Austauschparameter als Gütekriterium für die Beurteilung der Ausgangsdaten herangezogen wird.

12. Verfahren nach einem der vorhergehenden Ansprüche, bei welchem Rechendienste (RD1, RD2, RD3, RD4, RD5, RD6, RD7) zumindest zweier Softwareapplikationen (APP1, APP2) auf jeweils einen Rechenknoten (NOD) verteilt werden, wobei auf mindestens einen Rechenknoten (NOD) mindestens ein Rechendienst (RD1, RD2, RD3, RD4, RD5, RD6, RD7) lediglich einer der Softwareapplikationen (APP1, APP2) verteilt wird und/oder mindestens zwei Rechendienste (RD1, RD2, RD3, RD4, RD5, RD6, RD7) mindestens einer Softwareapplikation (APP1, APP2) auf mindestens unterschiedliche Rechenknoten (NOD) verteilt werden.

13. Verteileinrichtung zur Verteilung von Rechendiensten (RD1, RD2, RD3, RD4, RD5, RD6, RD7) eines Rechenknotennetzwerks (NET), welche zur Ausführung eines Verfahrens einem der vorhergehenden Ansprüche eingerichtet ist, umfassend eine Erfassungseinrichtung zur Erfassung des Austauschparameters und mit einer Implementierungseinrichtung zur Einrichtung des Rechendienstes (RD1, RD2, RD3, RD4, RD5, RD6, RD7) auf mindestens einem Rechenknoten (NOD) des Rechenknotennetzwerks (NET).

14. Rechenknotennetzwerk mit einer Verteileinrichtung nach dem vorhergehenden Anspruch.
